# EUROPÄISCHE PATENTANMELDUNG

(11) **EP 1 734 700 A1**
(43) Veröffentlichungstag der Anmeldung: **20.12.2006**
(21) Anmeldenummer: 05013016.0
(22) Anmeldetag: 16.06.2005
(51) Int. Cl.: H04L 12/413, H04L 12/56

(54) **Verfahren und Vorrichtung zur Echtzeit-Übertragung von Daten in einem Ethernet-Datennetz**

(71) Anmelder: SIEMENS AKTIENGESELLSCHAFT, 80333 München (DE)
(72) Erfinder: Albrecht, Andreas, 92712 Pirk (DE); Lomakin, Dimitri, Dr., 90411 Nürnberg (DE); Steindl, Günter, 92284 Poppenricht (DE)

(57) **Zusammenfassung**

Die Erfindung betrifft ein Verfahren zur Übertragung von Daten in einem Datennetz (1) unter Verwendung einer Ethernet-Datenübertragungsstrecke (4). Darüber hinaus betrifft die Erfindung einen Sender (2) und einen Empfänger (3) in einem solchen Datennetz (1) sowie ein System mit wenigstens einem Sender (2) und wenigstens einem Empfänger (3). Um auf einfache Art und Weise eine Echtzeit-Kommunikation über eine Ethernet-Datenübertragungsstrecke (4) zu ermöglichen wird ein Verfahren zur Übertragung von Daten (5, 6) vorgeschlagen, bei dem die Übertragung eines ersten Datentelegramms (5), dem eine erste Priorität zugeordnet ist, für die Übertragung eines zweiten Datentelegramms (6), dem eine zweite Priorität zugeordnet ist, unterbrochen wird.

## Beschreibung

Die Erfindung betrifft ein Verfahren zur Übertragung von Daten in einem Datennetz unter Verwendung einer Ethernet-Datenübertragungsstrecke. Darüber hinaus betrifft die Erfindung einen Sender und einen Empfänger in einem solchen Datennetz sowie ein System mit wenigstens einem Sender und wenigstens einem Empfänger.

Datennetze ermöglichen die Kommunikation zwischen mehreren Teilnehmern durch die Vernetzung, also Verbindung einzelner Teilnehmer untereinander. Kommunikation bedeutet dabei die Übertragung von Daten zwischen den Teilnehmern. Teilnehmer sind beispielsweise Computer, speicherprogrammierbare Steuerungen (SPS) oder andere Komponenten, die zum Austausch elektronischer Daten ausgebildet sind. Die zu übertragenden Daten werden dabei als Datentelegramme verschickt, d.h. die Daten werden zu Paketen zusammengepackt und in dieser Form über das Datennetz an den oder die entsprechenden Empfänger gesendet. Man spricht daher auch von Datenpaketen. Der Begriff "Übertragung von Daten" wird in diesem Dokument völlig synonym zur oben erwähnten Übertragung von Datentelegrammen oder Datenpaketen verwendet.

In verteilten Automatisierungssystemen müssen bestimmte Daten zu bestimmten Zeiten bei den dafür bestimmten Teilnehmern eintreffen und von den Empfängern verarbeitet werden. Ein nicht rechtzeitiges Eintreffen der Daten am Bestimmungsort kann dabei zu unerwünschten Ergebnissen beim Empfänger führen.

Der Einsatz von Ethernet-Technologie zur Übertragung von Daten in einem Datennetz nimmt immer mehr zu. Hauptgründe dafür sind einerseits preiswerte Komponenten und andererseits ein sehr sicherer Betrieb. Aus dem Stand der Technik sind eine Reihe von Lösungen bekannt, die es ermöglichen, Ethernet-Technologie in Feldbus-Systemen, insbesondere in der Automatisierungstechnik, einzusetzen. Ein Hauptproblem dieser bekannten Lösungen liegt in der mangelnden Echtzeitfähigkeit der Ethernet-Technologie begründet. Um Echtzeit-Kommunikation über eine Ethernet-Leitung zu ermöglichen, sehen die bekannten Lösungen verschiedene Ansätze vor, beispielsweise Zeitbeziehungsweise Bandbreitenreservierungen, um Echtzeitdaten in zuvor geplanten zyklischen Abständen zu übertragen. Eine "echte" Echtzeit-Kommunikation ist jedoch bisher nicht möglich. Anders ausgedrückt können mit Hilfe der Ethernet-Technologie Datentelegramme nicht zu einem beliebigen Zeitpunkt verschickt werden. Dies ist jedoch bei Feldbus-Anwendungen sehr erwünscht.

Eine Aufgabe der vorliegenden Erfindung ist es, auf einfache Art und Weise eine Echtzeit-Kommunikation über eine Ethernet-Datenübertragungsstrecke zu ermöglichen.

Diese Aufgabe wird durch ein Verfahren nach Anspruch 1 sowie durch einen Sender, einen Empfänger sowie ein System nach den Ansprüchen 8, 10 beziehungsweise 11 gelöst.

Dabei ist es, abweichend von allen bisherigen Lösungsvorschlägen, vorgesehen, eine aktuelle Übertragung eines Datentelegramms über eine Ethernet-Datenübertragungsstrecke (Ethernet-Leitung) zu unterbrechen und daraufhin ein weiteres Datentelegramm unmittelbar zu versenden. Dies wird erfindungsgemäß dadurch erreicht, dass auf der Bitübertragungsschicht (physical layer, PHY), also der untersten Ebene des ISO/OSI-Kommunikations-Referenzmodells mehrere "logische Kanäle" realisiert werden, die untereinander priorisiert werden und einander unterbrechen können. Die Unterbrechung der Datenübertragung richtet sich dabei nach den Prioritäten, die den einzelnen Datentelegrammen zugeordnet sind.

Erfindungsgemäß ist es vorgesehen, dass die unterbrochene Datenübertragung nach der Übertragung der vorgezogenen Daten fortgesetzt wird, ohne dass es zu Verzögerungen kommt. Mit anderen Worten erfolgt eine insbesondere im Vergleich mit bekannten Lösungen deutlich verbesserte Bandbreitenausnutzung der Ethernet-Datenübertragungsstrecke. Zudem können deutlich kürzere Zykluszeiten erreicht werden. Eine Zeit- oder Bandbreitenreservierung ist nicht erforderlich. Ebenfalls entfällt die Planung der Echtzeit-Kommunikation. "Sicherheitszuschläge" oder dergleichen sind nicht notwendig. Mit der vorliegenden Erfindung wird das Ethernet auf einfache Art und Weise "echtzeitfähig" gemacht. Die Erfindung ist nicht auf bestimmte Übertragungstechniken beschränkt. Vielmehr kann sie sowohl bei 100 Mbit-Ethernet, als auch 1Gbit-Ethernet und 10Gbit-Ethernet verwendet werden, und zwar unabhängig von den jeweils verwendeten Kodierverfahren.

Vorteilhafte Ausführungsformen der Erfindung sind in den Unteransprüchen angegeben.

Gemäß einer ersten vorteilhaften Ausführungsform der Erfindung erfolgt eine Unterbrechung eines Datentelegramms, dem eine niedrige Priorität zugeordnet ist, wenn ein anderes Datentelegramm, dem eine höhere Priorität zugeordnet ist, übertragen werden soll. Die Erfindung ist dabei nicht nur auf den Einsatz zweier verschiedener Prioritäten beschränkt. Selbstverständlich ist es auch möglich, eine Mehrzahl von unterschiedlichen Prioritäten einzusetzen, wobei vorzugsweise stets eine anstehende Übertragung eines Datentelegramms mit einer höheren Priorität die Übertragung eines Datentelegramms mit einer niedrigeren Priorität unterbricht.

Bei Feldbus-Anwendungen handelt es sich bei den zu übertragenden Daten mit niedriger Priorität vorzugsweise um azyklische Kommunikation, beispielsweise TCP/IP-Kommunikation, während es sich bei den zu übertragenden Daten mit höherer Priorität um Echtzeit-Kommunikation handelt.

Besonders vorteilhaft ist es, wenn das erste Datentelegramm zu einem beliebigen Zeitpunkt unterbrochen werden kann. Dies bedeutet, dass nicht etwa das Ende der Übertragung des ersten Datentelegramms abgewartet werden muss. Vielmehr erfolgt die Unterbrechung zeitgenau dann, wenn die Übertragung von Daten mit höherer Priorität erforderlich wird. Insbesondere erfolgt die Unterbrechung der Datenübertragung an einer beliebigen Stelle zwischen zwei zu übertragenden Zeichen. Werden beispielsweise pro Zeichen 10 Bit kodiert, dann kann die Unterbrechung des ersten Datentelegramms vorzugsweise jeweils zwischen dem 10. Bit des einen Zeichens und dem 1. Bit des nächsten Zeichens erfolgen.

Ganz besonders vorteilhaft ist es, wenn die Unterbrechung dadurch angezeigt wird, dass vor der Übertragung des zweiten Datentelegramms eine Anzahl von Steuerzeichen übertragen werden. Die Übertragung derartiger Steuerzeichen ist ebenfalls vor der Fortsetzung der Übertragung des ersten Datentelegramms sinnvoll. Dies bedeutet mit anderen Worten, dass der Sender die Unterbrechung der Datenübertragung, also mit anderen Worten den Wechsel eines "logischen Kanals" auf der Bitübertragungsschicht, dadurch verwirklicht, dass er ein oder mehrere spezielle Steuerzeichen verschickt. Der Empfänger kann dadurch, dass er diese Steuerzeichen von den sonstigen übertragenen Daten unterscheidet, eine Auswertung der Steuerzeichen vornehmen und die verschiedenen Datentelegramme beim Empfang voneinander trennen.

Die Steuerzeichen können dabei aus einzelnen oder mehreren Zeichen bestehen. Teile der bisher bekannten Ethernet-Steuerzeichen werden z. B. für die Telegrammsteuerung verwendet (beispielsweise Start- beziehungsweise Enddelimiter, Idle-Kennung, usw.). Die erfindungsgemäße Umschaltung der logischen Kanäle (Unterbrechung und Wiederaufsetzen der Telegramme sowie Fehlerbehandlung) erfolgt vorzugsweise durch die zurzeit unbenutzten beziehungsweise reservierten Ethernet-Steuerzeichen. Darüber hinaus ist es möglich, weitere Sonderzeichen zu vereinbaren, um die Prioritätssteuerung auf der Ethernet-Datenübertragungsstrecke zu verwirklichen.

Auf diese Weise kann ein mit einer niedrigeren Priorität laufendes Datentelegramm (z. B. ein TCP/IP-Telegramm) durch Versenden spezieller Steuerzeichen an einer beliebigen Stelle unterbrochen werden, um ein mit höherer Priorität zu versendendes Telegramm (z. B. Echtzeit-Daten) zu übertragen.

Die vorgeschlagene Protokollsteuerung ist technisch einfach realisierbar, da die für die Protokollsteuerung verwendeten Steuerzeichen in den übertragenen Daten nicht vorkommen und somit einfach ausgewertet werden können.

Für Sender und Empfänger eines Datenübertragungssystems, das für die Unterbrechung von Datentelegrammen ausgelegt ist, sind entsprechend modifizierte PHY-Bausteine erforderlich, mit denen die erforderlichen Steuerzeichen bereitgestellt beziehungsweise ausgewertet werden können.

Die Nutzung der Ethernet-Steuerzeichen ist durch den IEEE802.3-Standard (PCS-Teil, PCS = Physical Coding Sublayer) definiert. Die Nutzung der vorliegenden Erfindung lässt eine entsprechende Erweiterung dieses Standards als sinnvoll erscheinen. Jedoch ist auch eine proprietäre Lösung möglich. Danach wäre auch ein Mischbetrieb denkbar mit Komponenten, welche das beschriebene Verfahren unterstützen sowie Komponenten, die ausschließlich einen konventionellen Ethernet-Betrieb vorsehen.

Die vorliegende Erfindung wird nachfolgend anhand eines Ausführungsbeispiels näher erläutert. Dabei zeigen:
- FIG 1: eine schematische und stark vereinfachte Darstellung eines Datennetzes und
- FIG 2: eine schematische und stark vereinfachte Darstellung eines Ausführungsbeispiels der erfindungsgemäßen Datenübertragung.

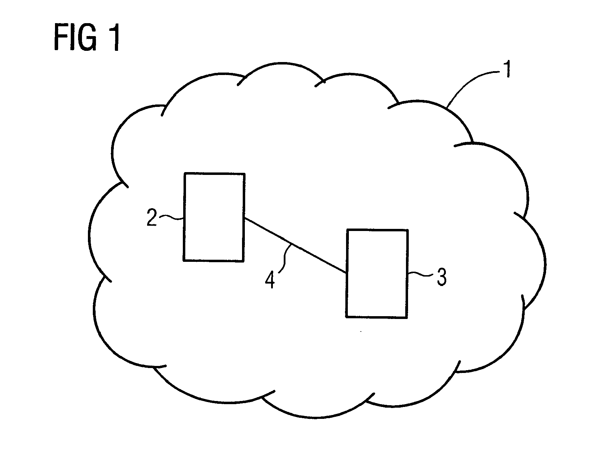

In FIG 1 ist schematisch und stark vereinfacht ein Datennetz 1 mit zwei Teilnehmern 2, 3 abgebildet, die über eine Ethernet-Datenübertragungsstrecke 4 Datentelegramme austauschen. Die Datenübertragungsstrecke 4 umfasst dabei drahtgebundene oder drahtlose Übertragungsleitungen. Es handelt sich mit anderen Worten um eine gewöhnliche Ethernet-Leitung, wie sie aus dem Stand der Technik bekannt ist. Dabei nimmt - zur besseren Verdeutlichung - der eine Teilnehmer 2 die Funktion eines Senders und der andere Teilnehmer 3 die Funktion eines Empfängers wahr. Selbstverständlich können aber alle Teilnehmer Sende- und Empfangsfunktionen ausführen. Im Beispiel handelt es sich um eine 1Gbit-Ethernet-Leitung mit einem entsprechenden Kodierverfahren.

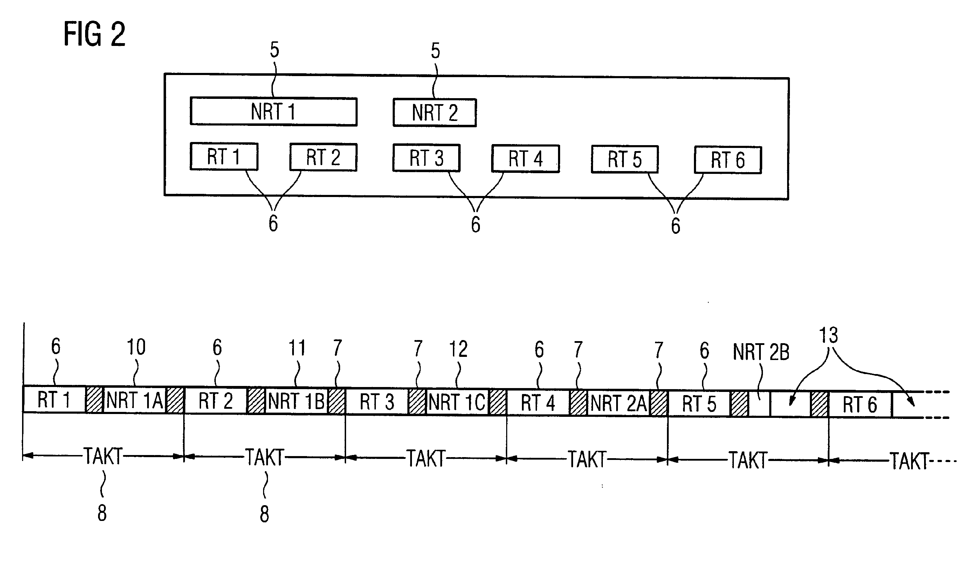

Wie im oberen Abschnitt von FIG 2 verdeutlicht, sollen von dem Sender 2 zu dem Empfänger 3 Datentelegramme 5 mit niedriger Priorität (Nicht-Echtzeitdaten, NRT-Daten) sowie Datentelegramme 6 mit hoher Priorität (Echtzeit-Daten, RT-Daten) übertragen werden. Die Übertragung der NRT-Daten 5 erfolgt dabei azyklisch, während die RT-Daten 6 stets zu bestimmten Zeiten, also zyklisch, versendet werden sollen.

Während bei den aus dem Stand der Technik bekannten Lösungen bestimmte Zeitplanungen erfolgen mussten, damit Bandbreiten für die Übertragung der RT-Daten 6 freigehalten werden, ist mit der vorliegenden Erfindung ein durchgehender Datenstrom möglich, wie um unteren Abschnitt von FIG 2 dargestellt.

Beginnend mit der Übertragung des Echtzeit-Datentelegramms RT1 und der anschließenden Umschaltung des "logischen Kanals" auf die Übertragung mit niedriger Priorität mit Hilfe eines entsprechenden Steuerzeichens 7 zur Protokoll-Umschaltung erfolgt in einem nächsten Schritt die Übertragung des NRT-Datentelegramms NRT1. Da mit Beginn des nächsten Taktes 8 zunächst wieder ein Echtzeit-Datentelegramm (RT2) gesendet werden soll, wird die Übertragung des NRT1-Datentelegramms durch ein entsprechendes Steuerzeichen 7 zur Protokoll-Umschaltung unterbrochen. Mit anderen Worten wurde nicht das vollständige Datentelegramm NRT1, sondern lediglich der erste Teil NRT1A 10 dieses Datentelegramms versendet. Nach der Übertragung des RT2-Datentelegramms und der Übertragung eines entsprechenden Steuerzeichens 7 zur Protokoll-Umschaltung wird das Versenden des NRT1-Datentelegramms mit der Übertragung des zweiten Teils NRT1B 11 des NRT-Datentelegramms an der unterbrochenen Stelle fortgesetzt. Nachdem schließlich auf gleiche Art und Weise das dritte RT-Datentelegramm (RT3) übertragen wurde, wird das Versenden des BRT1-Datentelegramms mit der Übertragung des dritten Teils (NRT1C) 12 abgeschlossen.

Die Übertragung des zweiten NRT-Datentelegramms NRT2 erfolgt in zwei Teilschritten, unterbrochen durch das Versenden der Echtzeitdaten RT5. Das Umschalten der "logischen Kanäle" erfolgt dabei stets durch die entsprechenden Steuerzeichen 7. Nach dem Übertragen des zweiten Teils NRT2B des zweiten Datentelegramms mit niedriger Priorität und nach dem Übertragen des Echtzeit-Datentelegramms RT6 findet für die restliche Taktzeit 13 keine Datenübertragung statt (Ruhe am Bus; IDLE).

Sender 2 und Empfänger 3 sind mit PHY-Bausteinen (nicht abgebildet) ausgerüstet, welche die Ausführung des erfindungsgemäßen Verfahrens, insbesondere die Bereitstellung und Auswertung der Steuerzeichen ermöglichen.

Zusammengefasst betrifft die Erfindung somit ein Verfahren zur Übertragung von Daten in einem Datennetz 1 unter Verwendung einer Ethernet-Datenübertragungsstrecke 4. Darüber hinaus betrifft die Erfindung einen Sender 2 und einen Empfänger 3 in einem solchen Datennetz 1 sowie ein System mit wenigstens einem Sender 2 und wenigstens einem Empfänger 3. Um auf einfache Art und Weise eine Echtzeit-Kommunikation über eine Ethernet-Datenübertragungsstrecke 4 zu ermöglichen wird ein Verfahren zur Übertragung von Daten 5, 6 vorgeschlagen, bei dem die Übertragung eines ersten Datentelegramms 5, dem eine erste Priorität zugeordnet ist, für die Übertragung eines zweiten Datentelegramms 6, dem eine zweite Priorität zugeordnet ist, unterbrochen wird.

## Patentansprüche

1. Verfahren zur Übertragung von Daten (5, 6) in einem Datennetz (1) unter Verwendung einer Ethernet-Datenübertragungsstrecke (4), **dadurch gekennzeichnet, dass** die Übertragung eines ersten Datentelegramms (5), dem eine erste Priorität zugeordnet ist, für die Übertragung eines zweiten Datentelegramms (6), dem eine zweite Priorität zugeordnet ist, unterbrochen wird.

2. Verfahren nach Anspruch 1, **dadurch gekennzeichnet, dass** die Unterbrechung der Übertragung des ersten Datentelegramms (5) in Abhängigkeit von den Prioritäten der Datentelegramme (5, 6) erfolgt.

3. Verfahren nach Anspruch 1 oder 2, **dadurch gekennzeichnet, dass** das zweite Datentelegramm (6) eine höhere Priorität aufweist als das erste Datentelegramm (5).

4. Verfahren nach einem der Ansprüche 1 bis 3, **dadurch gekennzeichnet, dass** das erste Datentelegramm (5) zu einem beliebigen Zeitpunkt unterbrochen werden kann.

5. Verfahren nach einem der Ansprüche 1 bis 4, **dadurch gekennzeichnet, dass** vor der Übertragung des zweiten Datentelegramms (6) eine Anzahl von Steuerzeichen (7) übertragen werden.

6. Verfahren nach einem der Ansprüche 1 bis 5, **dadurch gekennzeichnet, dass** vor der Fortsetzung der Übertragung des ersten Datentelegramms (5) eine Anzahl weiterer Steuerzeichen (7) übertragen werden.

7. Verfahren nach Anspruch 5 oder 6, **dadurch gekennzeichnet, dass** es sich bei den Steuerzeichen (7) um Ethernet-Sonderzeichen handelt.

8. Sender (2) in einem System zur Übertragung von Daten (5, 6) unter Verwendung einer Ethernet-Datenübertragungsstrecke (4), ausgebildet zum Unterbrechen der Übertragung eines ersten Datentelegramms (5), dem eine erste Priorität zugeordnet ist, für die Übertragung eines zweiten Datentelegramms (6), dem eine zweite Priorität zugeordnet ist.

9. Sender (2) nach Anspruch 8, ausgebildet zum Versenden von Steuerzeichen (7), welche anzeigen:
- die Unterbrechung der Übertragung des ersten Datentelegramms (5) und/oder
- die Übertragung des zweiten Datentelegramms (6) und/oder
- die Fortsetzung der Übertragung des ersten Datentelegramms (5).

10. Empfänger (3) in einem System zur Übertragung von Daten (5, 6) unter Verwendung einer Ethernet-Datenübertragungsstrecke (4), ausgebildet zur Verarbeitung von Steuerzeichen (7), welche anzeigen:
- die Unterbrechung der Übertragung eines ersten Datentelegramms (5), dem eine erste Priorität zugeordnet ist und/oder
- die Übertragung eines zweiten Datentelegramms (6), dem eine zweite Priorität zugeordnet ist und/oder
- die Fortsetzung der Übertragung des ersten Datentelegramms (5).

11. System zur Übertragung von Daten (5, 6) unter Verwendung einer Ethernet-Datenübertragungsstrecke (4) mit wenigstens einem Sender (2) nach Anspruch 8 oder 9 und wenigstens einem Empfänger (3) nach Anspruch 10.
